# EUROPEAN PATENT APPLICATION

(11) **EP 2 833 228 A2**
(43) Date of publication of application: **04.02.2015**
(21) Application number: 14178547.7
(22) Date of filing: 25.07.2014
(51) Int. Cl.: G05B 23/02

(54) **System and method for presenting information in an industrial monitoring system**

(30) Priority: 02.08.2013 US 201313958511
(71) Applicant: General Electric Company, Schenectady, New York 12345 (US)
(72) Inventor: Axness, Brian Martin, Minden, NV 89423-4119 (US); Kavanaugh, Trevor Shaun, Minden, NV 89423-4119 (US); Fuhrmann Jr, Barrett Joseph, Minden, NV 89423-4119 (US)
(74) Representative: Illingworth-Law, William Illingworth

(57) **Abstract**

A system 10 includes an industrial monitor 14 configured to receive inputs from a plurality of sensors 20, 22, 24, 26, 28, 30, 32 coupled to a mechanical system 12, wherein the industrial monitor 14 is configured to determine a plurality of measurements of the mechanical system 12 during operation based, at least in part, on the received inputs. The system 10 also includes a display device 94 communicatively coupled to the industrial monitor 14, wherein the display device 94 is configured to present a graphical depiction associated with a particular measurement of the plurality of measurements. The graphical depiction is configured to simultaneously present a representation of a current value of the particular measurement and a representation of a historical maximum value of the particular measurement.

## Description

The subject matter disclosed herein relates to industrial monitoring systems, such as asset condition monitoring systems.

Industrial monitoring systems, such as asset condition monitoring systems, generally provide monitoring capabilities for various types of mechanical devices and systems. For example, an industrial monitor may monitor one or more operational parameters of a gas turbine system. By specific example, the industrial monitoring system may include a number of sensors (e.g., temperature sensors, pressure sensors, flow sensors, and so forth) disposed throughout the gas turbine system. Such sensors may allow the industrial monitoring system to determine parameters of the mechanical system based, at least in part, on input received from these sensors. Additionally, certain industrial monitoring systems may include one or more graphical user interfaces (GUIs) that may be used to present (e.g., to an operator) the determined parameters of the mechanical system being monitored.

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In an embodiment, a system includes an industrial monitor configured to receive inputs from a plurality of sensors coupled to a mechanical system, wherein the industrial monitor is configured to determine a plurality of measurements of the mechanical system during operation based, at least in part, on the received inputs. The system also includes a display device communicatively coupled to the industrial monitor, wherein the display device is configured to present a graphical depiction associated with a particular measurement of the plurality of measurements. The graphical depiction is configured to simultaneously present a representation of a current value of the particular measurement and a representation of a historical maximum value of the particular measurement.

In another embodiment, a method includes receiving input from a sensor coupled to a mechanical system and determining, via a processor, a measurement of the mechanical system based, at least in part, on the received input. The method includes presenting, on a display device, a bar graph that includes: a first portion configured to illustrate a current value of the measurement. The bar graph also includes a historical maximum value indicator overlaying a portion of the bar graph, wherein the historical maximum value indicator is configured to illustrate a historical maximum value of the measurement. The bar graph also includes a maximum threshold value indicator overlaying a portion of the bar graph, wherein the maximum threshold value indicator is configured to illustrate a maximum threshold value of the measurement.

In another embodiment, a non-transitory, computer-readable medium includes instructions executable by a processor of an electronic device. The instructions include instructions to receive inputs from sensors coupled to a mechanical system during operation and instructions to determine, via a processor, a plurality of measurements of the operation of mechanical system based, at least in part, on the received inputs. The instructions also include instructions to present, on a display device, a plurality of graphical representations, wherein each graphical representation is associated with a measurement of the plurality of measurements. Additionally, each graphical representation is configured to simultaneously illustrate a current value of the associated measurement, a historical maximum value of the associated measurement, and a historical minimum value of the associated measurement.

These and other features, aspects, and advantages of the present invention will become better understood when the following detailed description is read with reference to the accompanying drawings in which like characters represent like parts throughout the drawings, wherein:
FIG. 1 is a diagram illustrating an embodiment of an industrial monitoring system, including certain inputs and outputs of the monitoring system;
FIG. 2 is a diagram illustrating an embodiment of a modular asset condition monitor as well as other devices in communication with the monitor;
FIG. 3 is a perspective view of an embodiment of a module of the modular asset condition monitor of FIG. 2, including a screen for displaying a graphical user interface (GUI);
FIG. 4 is a perspective view of an embodiment of a portable monitoring device, including a screen for displaying a GUI;
FIG. 5 is a perspective view of an embodiment of a portable computing device, including a screen for displaying a GUI;
FIG. 6 is a diagram illustrating a number of screens for an embodiment of the GUI;
FIG. 7 is a screen view of an embodiment of a direct view screen of the GUI corresponding to a particular measurement type in which the direct view screen illustrates current values, threshold values, and historical maximum values for measurements of the particular measurement type;
FIG. 8 is a screen view of an embodiment of a direct view screen of the GUI corresponding to a particular measurement type in which the direct view screen illustrates current values, threshold values, and historical maximum values for measurements of the particular measurement;
FIG. 9 is a screen view of an embodiment of a direct view screen of the GUI corresponding to a particular measurement type in which the direct view screen illustrates current values, minimum threshold values, maximum threshold values, historical minimum values, and historical maximum values for measurements of the particular measurement type;
FIG. 10 is a screen view of an embodiment of a direct view screen of the GUI corresponding to a particular measurement type with a certain measurement having a currently alarming status;
FIG. 11 is a screen view of the embodiment of FIG. 10 in which the certain measurement has a latched alarm status; and
FIG. 12 is a screen view of the embodiment of FIG. 11 in which the latched alarm status of the certain measurement has been cleared by the operator.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

As set forth above, industrial monitoring systems generally enable the monitoring of one or more operational parameters of a mechanical device or system, such as a turbomachine system, a power generation system, a gasification system, or a chemical production system. For example, the disclosed embodiments may be used or integrated with a gas turbine system, a stream turbine system, a combined cycle system, a power plant, or any combination thereof. An industrial monitoring system may include a number of sensors coupled to portions of a mechanical device to measure aspects of the mechanical device during operation. These sensors may include temperature sensors, pressure sensors, flow rate sensors, clearance sensors, proximity sensors, flame sensors, gas composition sensors, vibration sensors, current sensors, voltage sensors, other suitable sensors, or combinations thereof. Accordingly, the industrial monitor may include a number of channels, each of which may receive input from one or more sensors to determine one or more measurements for the mechanical device or system. Furthermore, the industrial monitor may determine an appropriate status for each condition or measurement based, at least in part, on the value of each measurement relative to one or more predetermined threshold values.

As such, present embodiments are directed towards an industrial monitoring system that includes one or more display devices (e.g., disposed on the industrial monitor, a workstation, a portable monitoring device, a smart phone device, or another suitable device) to allow the industrial monitoring system to display a graphical user interface (GUI) to an operator. Further, the GUI may include various screens to display, for example, names for the channels of the industrial monitor as well as the measurements collected by each channel. The display devices of the industrial monitoring system may have limited dimensions, which, in turn, may limit the available screen space to display information.

Accordingly, present embodiments include features, discussed in detail below, that are generally directed toward maximizing an amount of information conveyed by each screen of the GUI displayed on the display devices. Present embodiments may use, for example, one or more visual effects or cues to convey to the operator a combined measurement status for each channel of the industrial monitor. This may allow the operator to determine, for example, that one or more channels include a measurement having an irregular status (e.g., a currently alarming or latched alarm status) without the operator having to navigate through several screens of the GUI to make a similar determination. Accordingly, present embodiments provide an efficient GUI that may enable an operator to more quickly identify and address an issue (e.g., one or more irregular measurement statuses) in the monitored mechanical device or system.

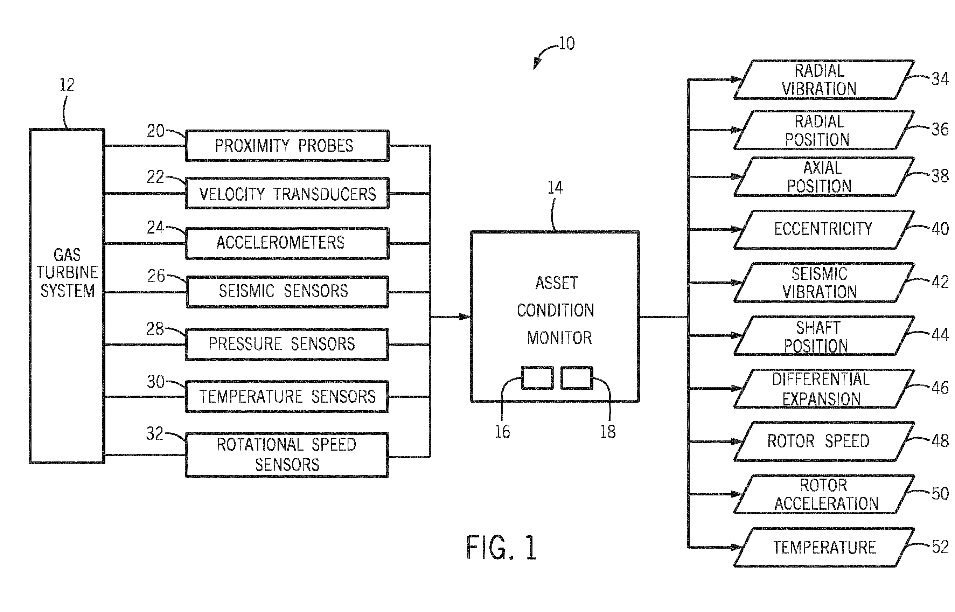

With the foregoing in mind, FIG. 1 illustrates an industrial monitoring system 10 for monitoring various operational parameters of a gas turbine system 12. It may be appreciated that, while a gas turbine system 12 is provided as one example of a monitored mechanical system, in other embodiments, the industrial monitoring system 10 may be used to monitor operational parameters of any mechanical devices or mechanical systems. For example, the industrial monitoring system 10 may be used to monitor operational parameters of axial compressors, screw compressors, gears, turbo-expanders, horizontal and vertical centrifugal pumps, electric motors, generators, fans, blowers, agitators, mixers, centrifuges, pulp refiners, ball mills, crushers, pulverizers, extruders, pelletizers, cooling towers, heat exchangers, or other suitable mechanical devices. Further, the industrial monitoring system 10 may be used to measure one or more mechanical devices of larger mechanical systems (e.g., steam turbine systems, hydraulic turbine systems, wind turbine systems, reactors, gasifiers, gas treatment systems, industrial automation systems, or other suitable mechanical systems).

The industrial monitoring system 10 illustrated in FIG. 1 includes an asset condition monitor 14, hereinafter referred to as monitor 14, including at least one processor 16 and memory 18. The monitor 14 illustrated in FIG. 1 is coupled to a number of sensors, including clearance sensors or proximity probes 20, velocity transducers 22, accelerometers 24, vibration or seismic sensors 26, pressure sensors 28, temperature sensors 30, and rotational speed sensors 32. It should be appreciated that the sensors 20, 22, 24, 26, 28, 30, and 32 are merely provided as examples, and that any other sensors (e.g., flow sensors, gas composition sensors, magnetic field sensors, flame sensors, current sensors, voltage sensors, and so forth) may be used that are suitable for performing measurements relevant to the operation and performance of a mechanical device or system (e.g., gas turbine system 12).

As illustrated in FIG. 1, the various sensors 20, 22, 24, 26, 28, 30, and 32 that are communicatively coupled to the monitor 14 may provide the monitor 14 with input such that the monitor 14 may, using the processor 16 and memory 18, determine one or more operational parameters of the monitored mechanical system (e.g., the gas turbine system 12). For example, the illustrated monitor 14 may receive input from measurements of the rotational speed of a shaft of the gas turbine system 12 from one or more rotational speed sensors 32, and may determine operational parameters (e.g., the rotation rate of the shaft, power output or load of the gas turbine system 12, or any other suitable operational parameter) based on the input received from the one or more rotational speed sensors 32, as well as other sensors functionally coupled to the gas turbine system 12. It may be appreciated that, as set forth in detail below, in certain embodiments, each operational parameter of the monitored mechanical system may be determined by a single channel of the monitor 14, and each channel of the monitor 14 may determine one or more measurements (e.g., based on the inputs received from the sensors 20, 22, 24, 26, 28, 30, and 32) in order to determine the operational parameter.

FIG. 1 illustrates some example operational parameters of the monitored mechanical system (e.g., gas turbine system 12) that may be determined (e.g., calculated or estimated) by the monitor 14 based on the various inputs received from sensors 20, 22, 24, 26, 28, 30, and 32. For the embodiment illustrated in FIG. 1, the monitor 14 may determine radial vibration 34, radial position 36, axial position 38, eccentricity 40, seismic vibration 42, shaft position 44, differential expansion 46, rotor speed 48, rotor acceleration 50, temperature 52, and/or any other suitable operational parameter of the gas turbine system 12, or any component thereof (e.g., compressors, shafts, pumps, valves, etc.). For example, the monitor 14 may use the processor 16 and memory 18 to process input from one or more proximity probes 20 to determine a differential expansion 46 of a casing of turbine section of the gas turbine system 12. By further example, the monitor 14 may process input from one or more rotational speed sensors 32 and/or one or more accelerometers 24 to determine rotor acceleration 50 of a shaft of the gas turbine system 12.

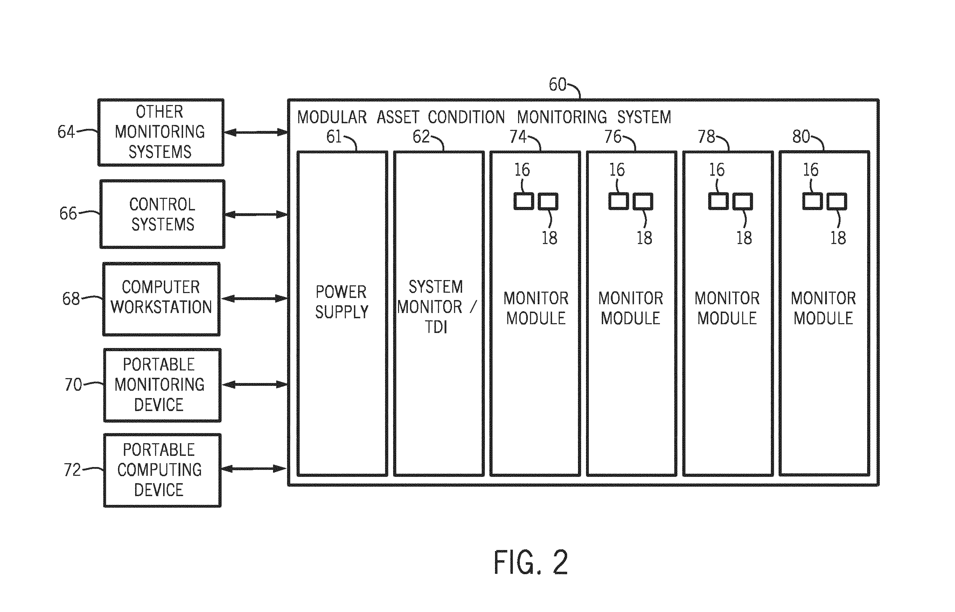

In certain embodiments, a number of monitors (e.g., monitor 14) may be combined in a modular fashion to form a modular monitoring system. For example, the modular asset condition monitoring system 60 illustrated in FIG. 2, hereinafter referred to as monitoring system 60, includes a number of modules suitable for performing particular functions during operation of the monitoring system 60. For example, in the embodiment of the monitoring system 60 illustrated in FIG. 2, a power supply module 61 may receive alternating current (AC) or direct current (DC) power and perform any suitable power conversions to provide power to the monitoring system 60. In other embodiments, the power supply module 61 may not be a module of the modular asset condition monitoring system 60, but may rather be a separate component coupled to the modular asset condition monitoring system 60. The illustrated monitoring system 60 also includes a system monitor or transient data interface (TDI) 62, which may provide the monitor's primary interface to the configuration, display, condition and monitoring software, and to external control systems. For example, the TDI 62 may support suitable communication protocols to communicatively couple the monitoring system 60 to other monitoring systems 64, to control systems 66 (e.g., process control systems, historians, and other plant control and automation systems), to computer workstations 68, to portable monitoring devices 70, to portable computing devices 72, and/or other suitable devices.

In addition to the power supply module 61 and the TDI 62, the monitoring system 60 illustrated in FIG. 2 also include a number of other modules, namely monitor modules 74, 76, 78, and 80, each an embodiment of the asset condition monitor 14 of FIG. 1. That is, each monitor module 74, 76, 78, and 80 may include a respective processor 16 and memory 18 configured to receive and process inputs from a variety of sensors (e.g., sensors 20, 22, 24, 26, 28, 30, and/or 32 of FIG. 1) to determine one or more operational parameters of the monitored mechanical device or system (e.g., gas turbine system 12). For example, monitor module 74 may include a number of channels (e.g., 4, 5, 6, 8, 10, 12, 16, 18, 20, or another suitable number of channels), each of which may receive input from a number of sensors to determine one of: radial vibration 34, radial position 36, axial position 38, eccentricity 40, differential expansion 46, rotor speed 48, rotor acceleration 50, or another suitable operational parameter of a mechanical system. By specific example, the monitor module 76 may include four channels, each of which may receive input from a number of sensors or determine one of case expansion or other types of differential expansion (e.g., standard single ramp differential expansion, non-standard single ramp differential expansion, dual ramp differential expansion, complementary differential expansion), axial position 38, and other positional measurements (e.g., valve position). By further example, the monitor module 78 may, in certain embodiments, include six channels, each dedicated to monitoring a particular temperature 52 in a portion of the monitored mechanical system.

Accordingly, each channel of a monitor module may receive a number (e.g., 1 to 500, 1 to 100, 1 to 50, or 1 to 20) of inputs from a number of sensors (e.g., sensors 20, 22, 24, 26, 28, 30, and/or 32) to determine an operational parameter of the mechanical system. It may further be appreciated that each channel may include a number (e.g., 1, 2, 4, 5, 6, 7, 8, or another suitable number) of underlying measurements that may be determined, based on received sensor input, in route to determining the overall operational parameter value for the mechanical system. For example, an embodiment of a four-channel monitor module (e.g., monitor module 74) may determine four operational parameters of the mechanical system; however, since, in certain embodiments, each channel may include 8 measurements, such a four-channel monitor may actually determine up to 32 individual measurements from the sensor input. By specific example, in certain embodiments, a radial vibration channel may determine up to 8 measurements, including a basic overall (direct) vibration amplitude, gap voltage, filtered amplitude (e.g., 1x filtered amplitude and 2x filtered amplitude), filtered phase (e.g., 1x filtered phase and 2x filtered phase), NOT 1x amplitude, and Smax (e.g., maximum phase). Further, it may be appreciated that alarm thresholds may be individually set for each measurement determined by each channel (e.g., Smax should remain below a threshold value to avoid an alarm condition). Other embodiments of monitor modules may include 1 to 100 (e.g., 1, 2, 3, 4, 5, 6, 7, 8, 9, 10, 11, 12, 13, 14, or 15) channels, each capable of determining 1 to 100 (e.g., 1, 2, 3, 4, 5, 6, 7, 8, 9, 10) measurements, to monitor an operational parameter of a mechanical system. Additionally, other embodiments of the modular monitoring system 60 may include, for example, 1 to 50, 1 to 25, 1 to 10, 1 to 8 monitor modules.

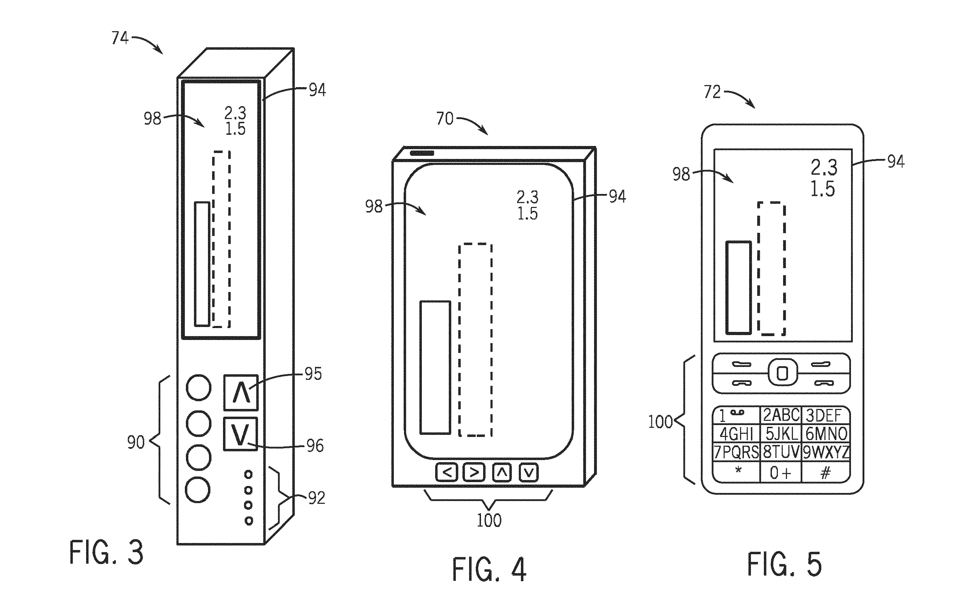

FIG. 3 illustrates a perspective view of an embodiment of the monitor module 74 of FIG. 2. The illustrated embodiment of the monitor module 74 includes four buffered output connections 90 (e.g., coaxial connections or other suitable connections) disposed on a front face of the monitor module 74 that may be coupled to portable test instrumentation by an operator. In other embodiments, the monitor module 74 may include any number of buffered output connections 90. Additionally, in certain embodiments, the monitor module 74 may also include a number of light emitting diodes (LEDs) 92 disposed on the front face of the monitor module 74 that may be used to indicate a status (e.g., normal, alert, connected, bypass, node voltage, "Not Ok", or a similar status) of the monitor module 74.

The illustrated monitor module 74 of FIG. 3 also includes a display device 94 that may be used to display information to an operator of the monitor module 74. For example, the display device may be a liquid crystal display (LCD), light-emitting diode (LED), organic light-emitting diode (OLED), or another suitable color display device. Further, the monitor module 74 also includes input devices (e.g., up arrow button 95 and down arrow button 96) that may be manipulated by an operator, for example, to control which of a number of screens of a graphical user interface (GUI) 98 is currently being displayed on the display device 94. In other embodiments, other input devices (e.g., buttons, dials, keyboards, mice, touch screens, or any other suitable input device) may additionally or alternatively be used with the module 74. As discussed in detail below, the GUI 98 may include screens for the names of the channels currently being monitored by the monitor module 74 as well as graphical representations for the measurements currently being collected by each of the channels.

It may be appreciated that, as illustrated in FIG. 2, in certain embodiments, other devices may be used to present the GUI 98. Accordingly, FIG. 4 illustrates a perspective view of an embodiment of the portable monitoring device 70, which may be a small, tablet-like device that may be used to present the GUI 98 to an operator. Similarly, FIG. 5 illustrates a perspective view of an embodiment of the portable computing device 72, which may be a smart phone, tablet, laptop, or similar mobile processing device. Both the portable monitoring device 70 of FIG. 4 and the portable computing device 72 of FIG. 5 may generally include a processor that may be used to execute instructions stored in a memory to present, on the respective display devices 94, the various screens of the GUI 98. Also, the portable monitoring device 70 and the portable computing device 72 may include communication circuitry (e.g., wireless networking circuitry) to allow the devices to communicate with the monitoring system 60 in order to present the GUI 98. Additionally, the portable monitoring device 70 and the portable computing device 72 may include user inputs 100 that may be used by an operator to, for example, control which screen of the GUI 98 is currently presented on the display device 94 of each device, respectively.

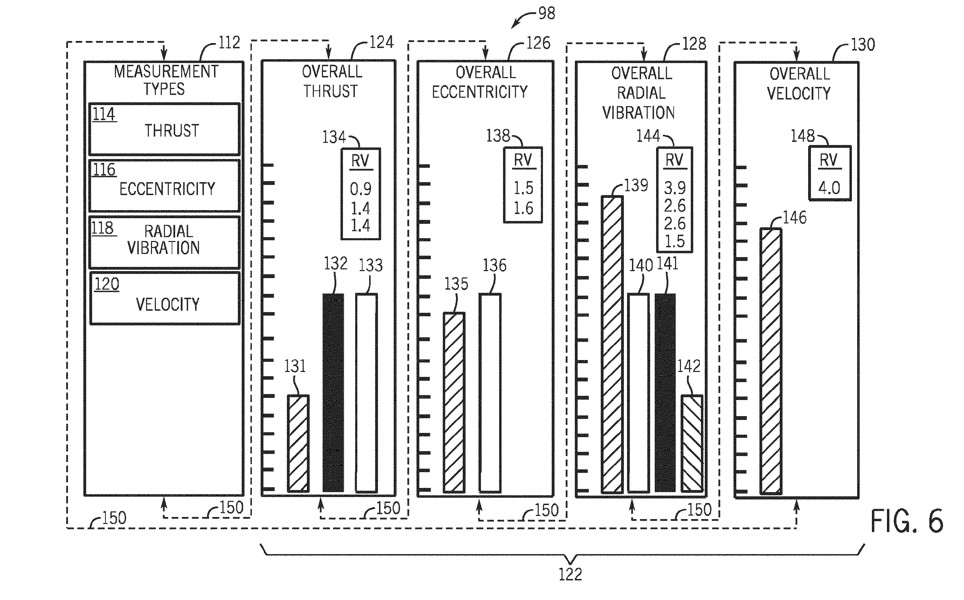

FIG. 6 illustrates an embodiment of the GUI 98 that may be displayed on one or more of the respective displays 94 of the monitor module 74 of FIG. 3, the portable monitoring device 70 of FIG. 4, and/or the portable computing device 72 of FIG. 5. As illustrated in FIG. 6, in certain embodiments, the GUI 98 may include a number of screens that are logically arranged in a continuous loop such that an operator may progressively cycle through all screens of the GUI 98 by continually pressing a user input (e.g., the up arrow button 95 or the down arrow button 96 illustrated in FIG. 3). As illustrated in FIG. 6, the first screen may be a measurement type screen 112, which may include a list (e.g., a visual representation) of the types of measurements currently being performed by the monitor (e.g., monitor module 74). For the illustrated embodiment, the measurement type screen 112 includes four measurement types, namely measurement type 114 (i.e., THRUST), measurement type 116 (i.e., ECCENTRICITY), measurement type 118 (i.e., RADIAL VIBRATION), and measurement type 120 (i.e., VELOCITY).

The GUI 98 illustrated in FIG. 6 includes a number of direct view screens 122, namely direct view screens 124, 126, 128, and 130, each of which may be respectively associated with a particular measurement type (e.g., one of measurement types 114, 116, 118, 120). For example, direct view screen 124 of FIG. 6 illustrates three graphical representations (e.g., bar graphs 131, 132, and 133), each representing a different overall thrust measurement currently being determined by different channels of the monitor module 74. By specific example, each of the overall measurements 131, 132, and 133 may provide a total or cumulative thrust measurement being determined by the monitor module 74 for three different components of the monitored mechanical system 12. Additionally, the illustrated direct view screen 124 includes a real-time value (RV) section 134 that may be used to present numerical values for the overall measurements 131, 132, and 133 illustrated on the direct view screen 124. It may be appreciated that, in other embodiments, the graphical representations may be line graphs, pie charts, Venn diagrams, or any other suitable graphical representations that may be presented on the display devices 94 discussed above. It may also be appreciated that the presentation of the data (e.g., the data scales, units, tick marks, etc.) on the discussed direct view screens are for illustrative purposes and are not intended to limit the present disclosure by conveying particular or relative values for the illustrated measurements.

It may be appreciated that the illustrated overall measurements illustrated in the GUI 98 of FIG. 6 (e.g., overall measurements 131, 132, and 133) may each represent an operational parameter of a particular measurement type (e.g., THRUST) being determined by one or more channels of the monitor module 74. In other words, the overall measurements 131, 132, and 133 may each represent a culmination of a number of underlying measurements that may be, as discussed above, determined by each channel based on inputs from one or more sensors. It may further be appreciated that, in certain embodiments, the GUI 98 may include additional screens for each of the measurements determined by each channel. For example, in certain embodiments, if each channel of the monitor module 74 includes 8 measurements (e.g., overall amplitude, gap voltage, 1x filtered amplitude, 2x filtered amplitude, 1x filtered phase, 2x filtered phase, NOT 1x amplitude, and Smax), 7 additional direct view screens may be inserted after each overall direct view screen (e.g., direct view screens 124, 126, 128, and 130) in the GUI 98 illustrated in FIG. 6. Further, it may be appreciated that, for such embodiments, each of the additional screen may illustrate multiple measurements of the same measurement type. For the illustrated embodiment, since the overall thrust direct view screen 124 illustrates three different overall measurements of the THRUST measurement type 114 via the bar graphs 131, 132, and 133, each additional screen (e.g., a gap voltage screen, a 1x filtered amplitude screen, a 2x filtered amplitude screen, a 1x filtered phase screen, a 2x filtered phase screen, a NOT 1x amplitude screen, and a Smax screen) associated with the THRUST measurement type 114 may similarly include three bar graphs, each corresponding to a measurement of a different component of the monitored mechanical system 12.

As illustrated in FIG. 6, direct view screen 126 includes a bar graphs 135 and 136, which graphically illustrate overall measurements of the ECCENTRICITY measurement type 116. Further, like the direct view screen 124, the illustrated direct view screen 126 includes a RV section 138 that may be used to present numerical values for the overall measurements illustrated by the bar graphs 135 and 136. The illustrated direct view screen 128 includes bar graphs 139, 140, 141, and 142 representing overall measurements of the RADIAL VIBRATION measurement type 118. The direct view screen 128 further includes a RV section 144 to present numerical values for the overall measurements illustrated by bar graphs 139, 140, 141, and 142. Further, the illustrated direct view screen 130 includes a bar graph 146 representing a single overall measurement of the VELOCITY measurement type 120, as well as a RV section 148 to present the numerical value for the overall measurement illustrated by the bar graph 146. As such, it may be appreciated that any of the direct view screens 122 may include any number of (e.g., 1, 2, 3, 4, 5, 6, 7, 8, 9, 10 or more) graphical representations (e.g., bar graphs) to illustrate multiple measurements of the same measurement type.

Additionally, as mentioned above, an operator may navigate through the various screens of the GUI 98 using, for example, the user inputs 95 and/or 96, illustrated in FIG. 3. As such, as illustrated for the embodiment of FIG. 6, the GUI 98 includes a number of directional arrows 150 that connect each of the screens 112, 124, 126, 128, and 130, to one another to indicate which screen may be subsequently presented based on the input provided by the operator. For example, as illustrated for the embodiment of FIG. 6, when viewing screen 112, if the GUI 98 receives operator input from the down arrow button 96, the GUI 98 may discontinue presentation of the screen 112, and may proceed with presenting the screen 124. Then, when the GUI 98 is presenting the screen 124, if the GUI 98 receives operator input from the down arrow button 96 once again, then the GUI 98 may cause the display 94 to present the screen 126. However, if, when the GUI 98 is presenting the screen 124, the GUI 98 instead receives operator input from the up arrow button 95, then the GUI 98 may cause the display 94 to present the screen 112 once again. As such, as indicated by the directional arrows 150, the GUI 98 may be logically arranged as a continuous loop that allows the operator to cycle through the various screens of the GUI 98 using, for example, a single user input (e.g., up arrow button 95 or down arrow button 96). It may be appreciated that the layouts illustrated by FIG. 6 are merely provided as examples, and that in certain embodiments, other arrangements of screens and/or other arrangements of the elements on the screens may be utilized within the GUI 98.

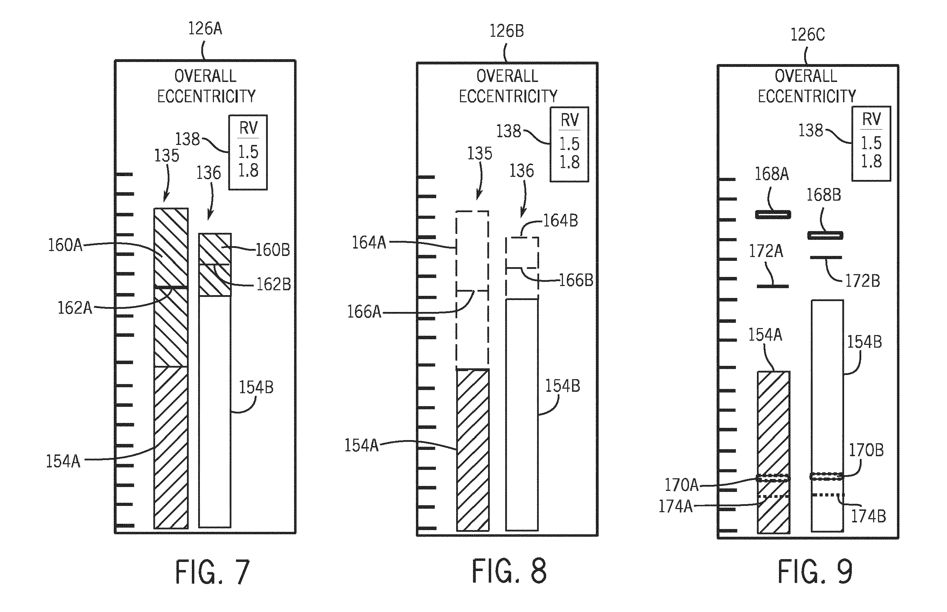

With the foregoing in mind, it may be appreciated that, when an operator is viewing a particular screen of the GUI 98, the amount of information that may be presented may be limited, for example, by the size of the display device 94. For example, when the operator is viewing the direct view screen 126 illustrated in FIG. 6, the operator may be presented with the graphical depictions or representations of the current values of measurements (e.g., a bar graphs 135 and 136), as well as the corresponding RV section 138, which may convey to the operator a current value for the two overall measurements of the ECCENTRICITY measurement type 116. Furthermore, as set forth below, bar graphs 135 and 136 of the direct view screens 126A-C respectively illustrated in FIGS. 7-9 include additional visual features (e.g., features overlaying portions of the bar graphs 135 and 136) that convey a greater amount of information to the operator regarding the measurements being displayed.

For example, FIG. 7 is a screen view of an embodiment of the direct view screen 126A. The first portions 154A and 154B of the illustrated bar graphs 135 and 136 respectively represent current values for the indicated measurement type (e.g., overall ECCENTRICITY). Additionally, the illustrated bar graphs 135 and 136 of FIG. 7 include a second portion 160A and 160B respectively overlaying (e.g., disposed above, on top of, or immediately adjacent to) the first portions 154A and 154B of the bar graphs 135 and 136. Further, these second portions 160A and 160B indicate maximum historical values of the measurements associated with bar graphs 135 and 136, respectively. By specific example, the second portions 160A and 160B may respectively indicate the highest or largest value that each measurement has reached, respectively, within a predetermined period of time (e.g., an hour, a day, a week, a month, a year, a period since the historical values were manually reset, or another suitable period of time). As illustrated in FIG. 7, in certain embodiments, the second portions 160A and 160B may have an appearance that may be easily distinguished from the first portions 154A and 154B, respectively. For example, as illustrated in FIG. 7, in certain embodiments, the first portion 154A and the second portion 160A may have different fill colors (e.g., black on yellow, red on blue, white on black, or any other high contrast color combination) or patterns (e.g., checkered, plaid, dotted, gradient, or another high contrast pattern) such that the operator may easily visually differentiate between the two portions of the bar graphs 135 and 136 to determine both a current value and a maximum historical value for the measurement.

Furthermore, as illustrated in FIG. 7, the direct view screen 126A also includes maximum threshold value indicators 162A and 162B respectively overlaying a portion of the bar graphs 135 and 136 that may be used to convey to the operator predetermined maximum threshold values associated with the illustrated measurements. That is, as mentioned above, each measurement may be associated with one or more respective threshold values (e.g., a maximum threshold value and/or a minimum threshold value) that may be used, for example, to determine a status of the measurement. For example, a measurement whose current value exceeds a threshold value may have a currently alarming status. Accordingly, an operator viewing the direct view screen 126A may visually determine that a current value for the overall measurements (e.g., indicated by first portions 154A and 154B of bar graphs 135 and 136, respectively) are not currently exceeding their respective maximum threshold values (e.g., indicated by the maximum threshold value indicators 162A and 162B). Further, the operator may visually ascertain whether a measurement has previously exceeded the maximum threshold value (e.g., indicated by the maximum threshold value indicators 162A and 162B) based on the historical maximum value of the measurement (e.g., indicated by the second portions 160A and 160B). It may be appreciated that the combination of the second portions 160A and 160B and the maximum threshold value indicators 162A and 162B, as illustrated in FIG. 7, may be especially useful for visualizing measurements having a currently alarming and/or a latched alarm status, as discussed in detail below. Further, it may be appreciated that the disclosed overlaying features of the bar graphs 135 and 136 (e.g., the second portion 160A and 160B, the maximum threshold value indicators 162A and 162B, and others discussed below) do not interfere with the presentation of the current values of the measurements (e.g., indicated by the first portions 154A and 154B of the bar graphs 135 and 136, respectively).

FIG. 8 is a screen view of an embodiment of the direct view screen 126B, illustrating additional methods of presenting measurement information to the operator. For example, the second portions 164A and 164B illustrated in FIG. 8 as overlaying a portion of the bar graphs 135 and 136, respectively, include a dashed border to enable the operator to visually differentiate the current values of the measurements (e.g., indicated by the first portions 154A and 154B) from maximum historical values of the measurements (e.g., as indicated by the second portions 164A and 164B). Further, the maximum threshold value indicators 166A and 166B are also illustrated as a dashed line respectively overlaying portions of the bar graphs 135 and 136. It may be appreciated that the dashed border of the second portions 164A and 164B as well as the dashed line of the maximum threshold value indicators 166A and 166B are merely provided as examples. In other embodiments, the second portions 164A and 164B may be visually differentiated from the first portions 154A and 154B, respectively, using background color, fill color, border color, border style, bar shape, brightness or luminosity, transparency, or another suitable visual effect. Further, in other embodiments, the maximum threshold value indicators 166A and 166B may be represented as lines, dashed lines, rectangles, symbols, icons, or other suitable representation, and may span the entire width of the bar graphs 135 and 136, respectively, or a smaller portion thereof.

FIG. 9 is a screen view of an embodiment of the direct view screen 126C, including an additional method of presenting historical values and threshold values associated with the illustrated measurements. For example, as illustrated in FIG. 9, in certain embodiments, historical maximum values for the indicated measurements may be represented by the historical maximum value indicators 168A and 168B, which may be illustrated as floating blocks overlaying a portion of the bar graphs 135 and 136, respectively. As such, for the embodiment of FIG. 9, the positions of the historical maximum value indicators 168A and 168B provide indications of the historical maximum values of the measurements using floating blocks in lieu of second portions (e.g., as used in direct view screens 126A and 126B of FIGS. 7 and 8 discussed above), in which floating blocks may generally provide a more efficient representation and occupy less space on the display device 94.

Similarly, as illustrated in FIG. 9, in certain embodiments, historical minimum values for the indicated measurements may be represented by the historical minimum value indicators 170A and 170B, which may also be illustrated as floating blocks overlaying a portion of the bar graphs 135 and 136, respectively. That is, the historical minimum value indicators 170A and 170B may indicate minimum values of the measurements over a period of time (e.g., an hour, a day, a week, a month, a year, a period since the historical values were manually reset, or another suitable period of time). Further, in certain embodiments, the appearance of the historical maximum value indicators 168A and 168B and the appearance of the historical minimum value indicators 170A and 170B may be different to enable the operator to visually differentiate between the two indicators. By specific example, as illustrated for the direct view screen 126C, the historical maximum value indicators 168A and 168B are illustrated as having a solid border, while the historical minimum value indicators 170A and 170B are illustrated as having a dashed border. It may be appreciated that these different border styles are provided merely as examples and that, in other embodiments, the historical maximum value indicators (e.g., historical maximum value indicators 168A and 168B) and the historical minimum value indicators (e.g., historical minimum value indicators 170A and 170B) may be visually differentiated from one another using border style, border color, background color, fill color, size, shape, and/or another suitable visual effect. It may also be appreciated that, since the historical minimum value indicators 170A and 170B may generally be disposed directly over the first portions 154A and 154B, respectively, the one or more visual effects of the historical minimum value indicator 170A and 170B may contrast the appearance of the first portions 154A and 154B, respectively, to aid the operator in distinguishing between these elements.

Furthermore, the direct view screen 126C of FIG. 9 also includes maximum threshold value indicators 172A and 172B (e.g., depicting predetermined maximum threshold values for the measurements represented by bar graphs 135 and 136, respectively) as well as minimum threshold value indicators 174A and 174B (e.g., depicting predetermined minimum threshold values for the measurements represented by bar graphs 135 and 136) overlaying a portion of the bar graph 135 and 136, respectively. In certain embodiments, as illustrated in FIG. 9, the maximum threshold value indicators (e.g., maximum threshold value indicators 172A and 172B) and the minimum threshold value indicators (e.g., minimum threshold value indicators 174A and 174B) may have a different appearance (e.g., color, line style, shape, or another suitable appearance) to enable the operator to visual differentiate the maximum threshold value indicators 172A and 172B from the minimum threshold value indicators 174A and 174B. Further, it may also be appreciated that, since the minimum threshold value indicators 174A and 174B may usually be disposed directly over the first portions 154A and 154B, respectively, the one or more visual effects of the historical minimum threshold value indicators 174A and 174B may respectively contrast the appearance of the first portions 154A and 154B to aid the operator in distinguishing between these elements.

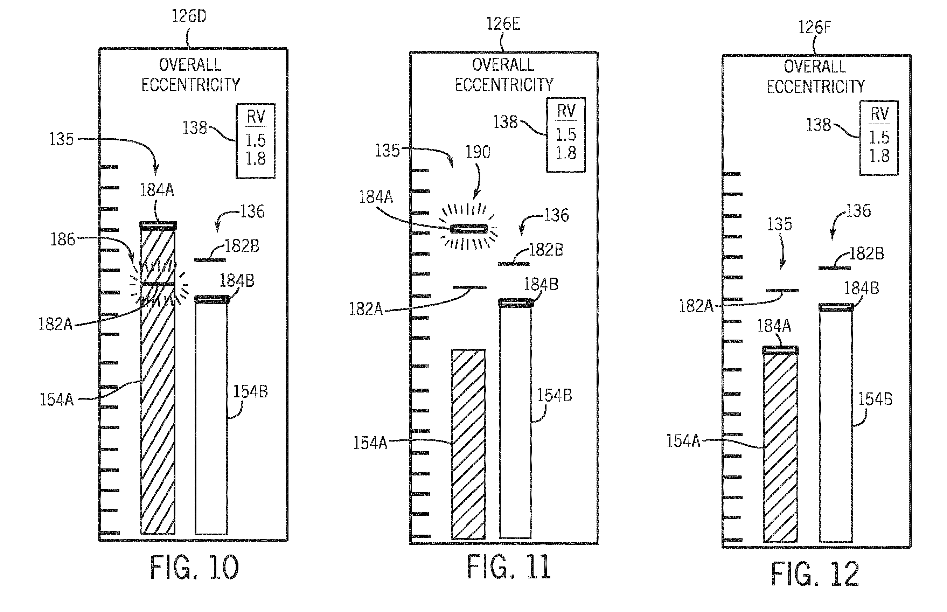

With the foregoing in mind, FIGS. 10-12 respectively illustrate an example of direct view screens 126D-F being successively viewed at different times by the operator as the values for the measurements vary. For the illustrated example, beginning with FIG. 10, an operator initially may be presented with the direct view screen 126D, which includes bar graphs 135 and 136 having first portions 154A and 154B that respectively illustrate current values for the measurements. Further, as indicated by the first portion 154A of FIG. 10, the value of the measurement has exceeded a maximum threshold value (e.g., indicated by the maximum threshold value indicator 182A overlaying a portion of the bar graph 135). Indeed, as illustrated by the historical maximum value indicator 184A, the current value for the measurement represented by the bar graph 135 is also the historical maximum value for the measurement.

Additionally, as illustrated in FIG. 10, in certain embodiments, the appearance of the first portions 154A or 154B, the maximum threshold value indicators 182A and 182B, and/or the historical maximum value indicators 184A and 184B that respectively overlay portions of the bar graphs 135 and 136 may have appearances that may be adjusted to reflect certain statuses of the associated measurements. For example, for the bar graph 135, since the current value of the measurement (e.g., indicated by first portion 154A) exceeds the maximum threshold value (e.g., indicated by maximum threshold value indicator 182A), the measurement associated with the bar graph 135 may have a currently alarming status. Accordingly, the first portion 154A and the maximum threshold value indicator 182A may include a particular color, border style, border color, animated emphasis (e.g., blinking, flashing, or strobing), and/or other suitable visual effects to indicate the currently alarming status of the measurement associated with the bar graph 135. For example, in certain embodiments, the maximum threshold value indicator 182A may blink (e.g., indicated by lines 186) to visually indicate that the threshold has been exceeded. Further, in certain embodiments, the historical maximum value indicator 184A may, additionally or alternatively, include a particular color, border style, border color, animated emphasis (e.g., blinking, flashing, or strobing), and/or other suitable visual effects to indicate that the current value of the measurement is also the historical maximum value of the associated measurement.

Continuing through the example above, after a period of time has passed and/or after remedial action, the operator may be presented with the direct view screen 126E of FIG. 11. For the direct view screen 126E, as illustrated by the first portion 154A of the bar graph 135, the current value of the measurement has fallen below the maximum threshold value indicator 184A. As such, in certain embodiments, the illustrated measurement may return to having a regular status. However, for certain embodiments, once a measurement has exceeded a threshold value (e.g., the maximum threshold value represented by the maximum threshold value indicator 182A), the measurement may retain a latched alarm status until the alarm is cleared by the operator.

For example, in certain embodiments, as illustrated in FIG. 11, the historical maximum value indicator 184A overlaying a portion of the bar graph 135 may include one or more visual effects that may convey the latched alarm status of the associated measurement. For example, in certain embodiments, the historical maximum value indicator 184A may, additionally or alternatively, include a particular color, border style, border color, animated emphasis (e.g., blinking, flashing, or strobing), and/or other suitable visual effects to indicate that the measurement previously exceeded the maximum threshold value (e.g., indicated by the maximum threshold value indicator 182A) and, therefore, has a latched alarm status. By specific example, the illustrated historical maximum value indicator 184A of FIG. 11 is configured to blink (e.g., as indicated by lines 190) to convey to the operator the latched alarm status of the associated measurement. Furthermore, as illustrated in FIG. 11, since the associated measurement no longer has a currently alarming status (e.g., the current value of the measurement is below the maximum threshold value), the appearance of the first portion 154A of the bar graph 135 may return to a normal (e.g., non-emphasized) appearance.

Continuing through the example, after the operator has cleared the latched alarm status of the measurement associated with the bar graph 135, the operator may be presented with the embodiment of the direct view screen 126F illustrated in FIG. 12. As illustrated in FIG. 12, in certain embodiments, once the operator clears the latched alarm status of the measurement associated with the bar graph 135, the historical maximum value represented by the historical maximum value indicator 184A may be reset to the current value of the measurement (e.g., the historical maximum value indicator 184A is now positioned at the top of the first portion 154A). Further, for the illustrated embodiment, the appearance of the first portion 154A, the maximum threshold value indicator 182A, and the historical maximum value indicator 184A may all return to a normal (e.g., non-emphasized) appearance once the irregular statuses have been resolved.

Technical effects of the invention include enabling an operator to glean more information from screens of a GUI displayed on a display device of an industrial monitoring system. For example, the present approach may enable an operator to simultaneously visually ascertain, for a particular measurement type, a current value of measurements, one or more threshold values associated with the measurements, historical minimum measurement values and/or maximum measurement values associated with the measurements, or any combination thereof. Further, the present approach provides different visual effects that may be used to indicate particular statuses (e.g., currently alarming, latched alarm, and so forth) of a measurement being viewed. Accordingly, the present approach enables the operator to immediately be made aware of current measurement values relative to threshold and historical extrema values and, therefore, enables the operator to more quickly address any potential problems with the monitored mechanical system.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   an industrial monitor configured to receive inputs from a plurality of sensors coupled to a mechanical system, wherein the industrial monitor is configured to determine a plurality of measurements of the mechanical system during operation based, at least in part, on the received inputs; and
   a display device communicatively coupled to the industrial monitor, wherein the display device is configured to present a graphical depiction associated with a particular measurement of the plurality of measurements, wherein the graphical depiction is configured to simultaneously present a representation of a current value of the particular measurement and a representation of a historical maximum value of the particular measurement.
2. The system of clause 1, wherein the graphical depiction is configured to simultaneously present the representation of the current value of the particular measurement, the representation of the historical maximum value of the particular measurement, and a representation of a maximum threshold value associated with the particular measurement.
3. The system of any preceding clause, wherein the graphical depiction is configured to simultaneously present the representation of the current value of the particular measurement, the representation of the historical maximum value of the particular measurement, and a representation of a minimum threshold value associated with the particular measurement.
4. The system of any preceding clause, wherein the graphical depiction is configured to simultaneously present the representation of the current value of the particular measurement, the representation of the historical maximum value of the particular measurement, and a representation of a historical minimum value of the particular measurement.
5. The system of any preceding clause, wherein the graphical depiction comprises a bar graph or a line graph, and wherein the representation of the historical maximum value is presented as overlaying a portion of the bar graph or line graph.
6. The system of any preceding clause, wherein the display device is disposed on the industrial monitor, a portable monitoring device, or a mobile computing device.
7. The system of any preceding clause, wherein the representation of the historical maximum value is configured to have an appearance that progressively changes to indicate an irregular status of the particular measurement.
8. The system of any preceding clause, wherein the representation of the historical maximum value is configured to not interfere with the presentation of the representation of the current value of the particular measurement.
9. The system of any preceding clause, wherein the plurality of measurements comprises radial vibration measurements, radial position measurements, axial position measurements, eccentricity measurements, seismic vibration measurements, shaft position measurements, differential expansion measurements, rotor speed measurements, rotor acceleration measurements, temperature measurements, or combinations thereof.
10. The system of any preceding clause, wherein the plurality of sensors comprise proximity probes, velocity transducers, accelerometers, seismic sensors, pressure sensors, temperature sensors, rotational speed sensors, or combinations thereof.
11. The system of any preceding clause, wherein the mechanical system comprises a gas turbine system, a steam turbine system, a hydraulic turbine system, a wind turbine system, or an industrial automation system.
12. A method, comprising:
   receiving input from a sensor coupled to a mechanical system;
   determining, via a processor, a measurement of the mechanical system based, at least in part, on the received input; and
   presenting, on a display device, a bar graph comprising:
      a first portion configured to illustrate a current value of the measurement;
      a historical maximum value indicator overlaying a portion of the bar graph, wherein the historical maximum value indicator is configured to illustrate a historical maximum value of the measurement; and
      a maximum threshold value indicator overlaying a portion of the bar graph, wherein the maximum threshold value indicator is configured to illustrate a maximum threshold value of the measurement.
13. The method of any preceding clause, wherein the bar graph comprises a historical minimum value indicator overlaying a portion of the bar graph, wherein the historical minimum value indicator is configured to illustrate a historical minimum value of the measurement.
14. The method of any preceding clause, wherein the bar graph comprises a minimum threshold value indicator overlaying a portion of the bar graph, wherein the minimum threshold value indicator is configured to illustrate a minimum threshold value of the measurement.
15. The method of any preceding clause, wherein the historical maximum value indicator, the historical minimum value indicator, the maximum threshold value indicator, and the minimum threshold value indicator are configured to not interfere with an operator's view of the bar.
16. The method of any preceding clause, wherein one or more of the bar, the historical maximum value indicator, the historical minimum value indicator, the maximum threshold value indicator, and the minimum threshold value indicator are configured to have an appearance that denotes a currently alarming or latched alarm status of the measurement.
17. The method of any preceding clause, wherein the appearance comprises color emphasis, animated emphasis, an icon, a symbol, or a combination thereof
18. A non-transitory, computer-readable medium comprising instructions executable by a processor of an electronic device, the instructions comprising:
   instructions to receive inputs from sensors coupled to a mechanical system during operation;
   instructions to determine, via a processor, a plurality of measurements of the operation of mechanical system based, at least in part, on the received inputs; and
   instructions to present, on a display device, a plurality of graphical representations, wherein each graphical representation is associated with a measurement of the plurality of measurements, wherein each graphical representation is configured to simultaneously illustrate a current value of the associated measurement, a historical maximum value of the associated measurement, and a historical minimum value of the associated measurement.
19. The medium of any preceding clause, wherein each graphical representation is configured to simultaneously illustrate the current value of the associated measurement, the historical maximum value of the associated measurement, the historical minimum value of the associated measurement, a maximum threshold value of the associated measurement, and a minimum threshold value of the associated measurement.
20. The medium of any preceding clause, wherein one or more of the current value of the associated measurement, the historical maximum value of the associated measurement, the historical minimum value of the associated measurement, the maximum threshold value of the associated measurement, and the minimum threshold value of the associated measurement are illustrated with a progressively updated appearance that denotes a currently alarming or latched alarm status of the associated measurement.

## Claims

1. A system (10), comprising:
an industrial monitor (14) configured to receive inputs from a plurality of sensors (20, 22, 24, 26, 28, 30, 32) coupled to a mechanical system (12), wherein the industrial monitor (14) is configured to determine a plurality of measurements of the mechanical system (12) during operation based, at least in part, on the received inputs; and
a display device (94) communicatively coupled to the industrial monitor (14), wherein the display device (94) is configured to present a graphical depiction associated with a particular measurement of the plurality of measurements, wherein the graphical depiction is configured to simultaneously present a representation of a current value of the particular measurement and a representation of a historical maximum value of the particular measurement.

2. The system of claim 1, wherein at least one of:
the graphical depiction is configured to simultaneously present the representation of the current value of the particular measurement, the representation of the historical maximum value of the particular measurement, and a representation of a maximum threshold value associated with the particular measurement;
the graphical depiction is configured to simultaneously present the representation of the current value of the particular measurement, the representation of the historical maximum value of the particular measurement, and a representation of a minimum threshold value associated with the particular measurement, and
the graphical depiction is configured to simultaneously present the representation of the current value of the particular measurement, the representation of the historical maximum value of the particular measurement, and a representation of a historical minimum value of the particular measurement.

3. The system of claim 1 or claim 2, wherein the graphical depiction comprises a bar graph or a line graph, and wherein the representation of the historical maximum value is presented as overlaying a portion of the bar graph or line graph.

4. The system of claim 1, 2 or 3, wherein the display device (94) is disposed on the industrial monitor (14), a portable monitoring device, or a mobile computing device.

5. The system of any preceding claim, wherein:
the representation of the historical maximum value is configured to have an appearance that progressively changes to indicate an irregular status of the particular measurement, and/or
the representation of the historical maximum value is configured to not interfere with the presentation of the representation of the current value of the particular measurement.

6. The system of any preceding claim, wherein the plurality of measurements comprises radial vibration measurements, radial position measurements, axial position measurements, eccentricity measurements, seismic vibration measurements, shaft position measurements, differential expansion measurements, rotor speed measurements, rotor acceleration measurements, temperature measurements, or combinations thereof.

7. The system of any preceding claim, wherein the plurality of sensors comprise proximity probes (20), velocity transducers (22), accelerometers (24), seismic sensors (26), pressure sensors (28), temperature sensors (30), rotational speed sensors (32), or combinations thereof.

8. The system of any preceding claim, wherein the mechanical system comprises a gas turbine system (12), a steam turbine system, a hydraulic turbine system, a wind turbine system, or an industrial automation system.

9. A method, comprising:
receiving input from a sensor (20, 22, 24, 26, 28, 30, 32) coupled to a mechanical system (12);
determining, via a processor (16), a measurement of the mechanical system (12) based, at least in part, on the received input; and
presenting, on a display device (94), a bar graph comprising:
a first portion configured to illustrate a current value of the measurement;
a historical maximum value indicator overlaying a portion of the bar graph, wherein the historical maximum value indicator is configured to illustrate a historical maximum value of the measurement; and
a maximum threshold value indicator overlaying a portion of the bar graph, wherein the maximum threshold value indicator is configured to illustrate a maximum threshold value of the measurement.

10. The method of claim 9, wherein the bar graph comprises a historical minimum value indicator overlaying a portion of the bar graph, wherein the historical minimum value indicator is configured to illustrate a historical minimum value of the measurement.

11. The method of claim 9 or claim 10, wherein the bar graph comprises a minimum threshold value indicator overlaying a portion of the bar graph, wherein the minimum threshold value indicator is configured to illustrate a minimum threshold value of the measurement.

12. The method of claim 9, 10 or 11, wherein the historical maximum value indicator, the historical minimum value indicator, the maximum threshold value indicator, and the minimum threshold value indicator are configured to not interfere with an operator's view of the bar.

13. The method of any one of claims 9 to 12, wherein one or more of the bar, the historical maximum value indicator, the historical minimum value indicator, the maximum threshold value indicator, and the minimum threshold value indicator are configured to have an appearance that denotes a currently alarming or latched alarm status of the measurement, wherein, preferably, the appearance comprises color emphasis, animated emphasis, an icon, a symbol, or a combination thereof

14. A non-transitory, computer-readable medium comprising instructions executable by a processor of an electronic device, the instructions comprising:
instructions to receive inputs from sensors coupled to a mechanical system during operation;
instructions to determine, via a processor, a plurality of measurements of the operation of mechanical system based, at least in part, on the received inputs; and
instructions to present, on a display device, a plurality of graphical representations, wherein each graphical representation is associated with a measurement of the plurality of measurements, wherein each graphical representation is configured to simultaneously illustrate a current value of the associated measurement, a historical maximum value of the associated measurement, and a historical minimum value of the associated measurement.

15. The medium of claim 14, wherein each graphical representation is configured to simultaneously illustrate the current value of the associated measurement, the historical maximum value of the associated measurement, the historical minimum value of the associated measurement, a maximum threshold value of the associated measurement, and a minimum threshold value of the associated measurement, and, preferably, one or more of the current value of the associated measurement, the historical maximum value of the associated measurement, the historical minimum value of the associated measurement, the maximum threshold value of the associated measurement, and the minimum threshold value of the associated measurement are illustrated with a progressively updated appearance that denotes a currently alarming or latched alarm status of the associated measurement.
